(19) Europäisches Patentamt

European Patent Office

Office européen des brevets

(11) Veröffentlichungsnummer: **0 322 497 B1**

(12) **EUROPÄISCHE PATENTSCHRIFT**

(45) Veröffentlichungstag der Patentschrift: **22.01.92**

(21) Anmeldenummer: **88102692.6**

(22) Anmeldetag: **24.02.88**

(51) Int. Cl.⁵: **B29C 45/23**, B29C 45/20, B29C 45/17

(54) **Plastifizieraggregat an einer Kunststoff-Spritzgiesseinheit.**

(30) Priorität: **30.12.87 DE 3744519**

(43) Veröffentlichungstag der Anmeldung:
**05.07.89 Patentblatt 89/27**

(45) Bekanntmachung des Hinweises auf die
Patenterteilung:
**22.01.92 Patentblatt 92/04**

(84) Benannte Vertragsstaaten:
**AT CH DE ES FR GB IT LI NL**

(56) Entgegenhaltungen:
EP-A- 0 283 582      AU-B- 576 327
DE-A- 2 835 805      DE-A- 3 605 219
FR-A- 954 395        US-A- 3 026 567

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr. et al**
**Patentanwälte Dr. Mayer & Frank Westliche 24**
**W-7530 Pforzheim(DE)**

**Beschreibung**

Die Erfindung bezieht sich auf ein Plastifizieraggregat entsprechend dem Oberbegriff des Patentanspruches 1.

Bei einem bekannten Plastifizieraggregat dieser Art (US-PS 3 026 567) ist der hydraulische Steuerzylinder am vorderen Ende des Plastifizierzylinders an dessen Mantel befestigt. Sein hydraulischer Hub wird mittels eines zweiarmigen Hebels in einen Rückwärtshub der Düsennadel umgewandelt, durch welchen die Düse geöffnet wird. Die Schwenkachse des zweiarmigen Hebels schneidet die Spritzachse des Plastifizieraggregates. Dadurch ist der an der Düsennadel angreifende Hebel (Angriffshebel) des zweiarmigen Hebels verhältnismäßig kurz und beschreibt demzufolge in seinem Anlenkpunkt einen Kreisbogen mit relativ kleinem Radius. Andererseits ist bei einem Plastifizieraggregat der genannten Gattung ein ungehinderter Durchfluß des Kunststoffmaterials durch die Verschlußdüse möglich und dadurch der üblicherweise zu verzeichnende Druckabfall in der Verschlußdüse weitgehend vermeidbar. Die Verschlußdüse weist daher alle vorteilhaften Eigenschaften einer 'offenen' Düse auf und ist als solche einsetzbar, wenn sich die Verschlußnadel in permanenter Offenstellung befindet. Unter einer 'offenen Düse' im obigen Sinne wird eine Düse verstanden, deren Düsenkörper einen zur Spritzachse koaxialen Düsenkanal aufweist und ohne Verschlußorgane ist. Solche offenen Düsen finden dank ihrer vielseitigen Verwendbarkeit bei der Verarbeitung unterschiedlicher Kunststoffe und wegen ihrer geringen Störanfälligkeit vielfache Verwendung. Verschlußdüsen sind demgegenüber bei der Bewältigung spezieller spritztechnischer Aufgaben unentbehrlich, z.B. bei der Verarbeitung von Polyamiden. Sie ermöglichen eine hohe Einspritzgeschwindigkeit in der Anfangsphase der Einspritzung, weil das plastische Material im Plastifizierzylinder vor Öffnung der Düse unter einem entsprechenden Überdruck steht.

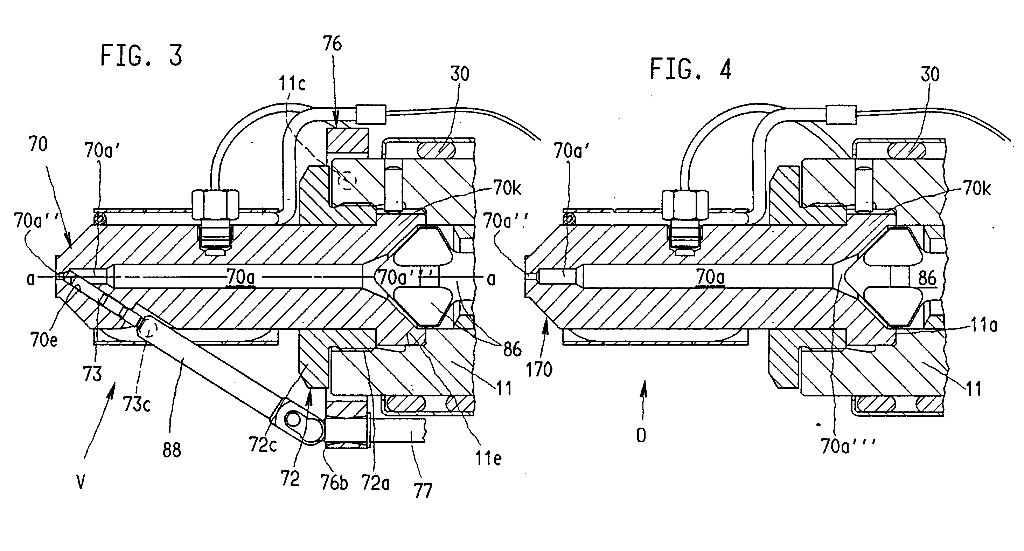

Bekannt sind auch Verschlußdüsen, deren von einer Feder belastete Düsennadel winklig zur Spritzachse im Düsenkörper angeordnet ist (FR-PS 1.439.001 - Fig. 3). Bei solchen Verschlußdüsen öffnet die Düsennadel, wenn beim Kunststoffmaterial ein bestimmter Grenzdruck überschritten wird. Insoweit fehlen die Voraussetzungen für eine Steuerung der Verschlußdüse nach dem Programm eines Rechners.

Vom Gegenstand der älteren europäischen Patentanmeldung Nr. 87118610.2 unterscheidet sich der Gegenstand des vorliegenden Patentes insbesondere dadurch, daß eine zur Spritzachse einen Winkel einschließende Düsennadel mit Hilfe des Vorwärtshubes des Steuerzylinders schließbar ist.

Der Erfindung liegt die Aufgabe zugrunde, die oben geschilderten Vorteile des gattungsgemäßen Plastifizieraggregates mit dem weiteren Vorteil zu verbinden, daß der Steuerzylinder beim Wechsel des Plastifizierzylinders am Trägerelement der Kunststoff-Spritzgießeinheit verbleiben kann und die Düsennadel bei Beaufschlagung der rückseitigen Kolbenfläche des Steuerzylinders in Verschlußstellung gefahren wird.

Diese Aufgabe wird durch die im Anspruch 1 genannten Merkmale gelöst. Bei einer solchen Ausbildung ist das erforderliche automatische Abkuppeln des Steuerzylinders Bestandteil des Rechnerprogramms für das Wechseln des Plastifizierzylinders, wobei ein zuverlässiges Schließen der Düsenmündung auch bei extrem hohen Drücken im plastischen Material möglich ist, welche Drücke beispielsweise bis zu 2.800 bar erreichen können.

Eine Übertragung der Bewegung des Kolbens des Steuerzylinders beim hydraulischen Hub auf die Düsennadel ist ohne Verspannungen im System möglich, wenn gemäß der Ausbildung nach Anspruch 2 die Kraftumlenkung gewissermaßen über ein kardanisches Gelenksystem erfolgt.

Weitere Ausbildungen der Erfindungen sind den abhängigen Ansprüchen zu entnehmen.

Nachstehend wird die Erfindung anhand der Zeichnung an einem Ausführungsbeispiel erläutert.

Es zeigen:

Fig. 1
das Plastifizieraggregat in Seitenansicht, teilweise in vertikalem Schnitt bei halbgeöffneter Verschlußdüse,

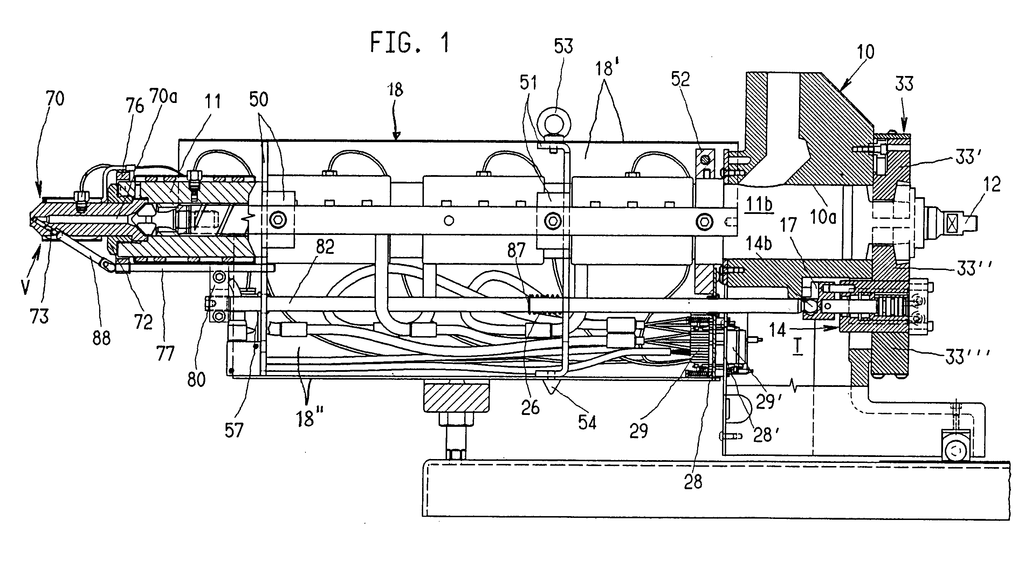

Fig. 2
einen Ausschnitt aus Fig. 1 in vergrößerter Darstellung,

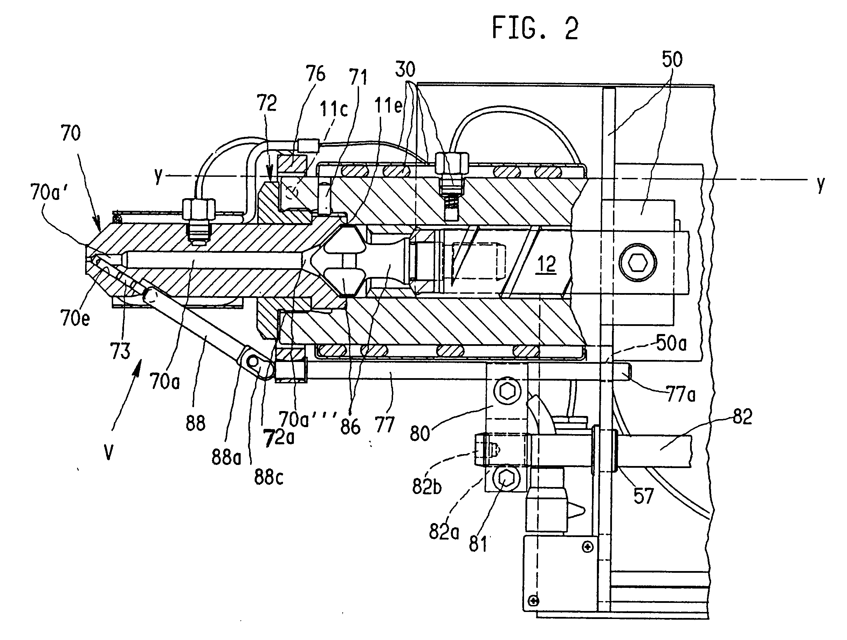

Fig. 3
einen vergrößerten Ausschnitt aus Fig. 2,

Fig. 4
den Ausschnitt gemäß Fig. 3 nach Austausch des Düsenkörpers mit einem gleichgestalteten Düsenkörper ohne Schiebebohrung zwecks Bildung einer offenen Düse,

Fig. 5
die Hohlschraube zur Verbindung der Verschlußdüse bzw. der offenen Düse mit dem Plastifizierzylinder in pespektivischer Darstellung,

Fig. 6
zwei der Düsennadel benachbarte kraftübertragende Elemente vor Herstellung der gegenseitigen Gelenkverbindung in perspektivischer Darstellung,

Fig. 7, 7a und 8
den Schwenkring zur Halterung kraftübertragender Elemente und den Düsenkörper je in perspektivischer Darstellung,

Fig. 9
die Verschlußdüse mit den kraftübertragenden Elementen in Stirnansicht.

Im zeichnerisch dargestellten Ausführungsbeispiel ist der mit Heizeinrichtung 30 versehene Plastifizierzylinder 11 des Plastifizieraggregates mit seinem rückwärtigen Abschnitt 11b in einer zentralen Bohrung 10a des als Trägerblock ausgebildeten Trägerelementes 10 aufgenommen. Er ist dort mit Hilfe der Verriegelungseinrichtung 33 in Arbeitsposition verriegelbar. Die Verriegelungseinrichtung 33 umfaßt radial und rückseitig am Trägerelement 10 vertikal geführte Schieber 33'; 33'', 33''', von welchen der untere Schieber 33'', 33''' zweiteilig ausgebildet ist. In einer Bohrung dieses Schiebers ist eine Kolben-Zylinder-Einheit (Steuerzylinder 14) zur Steuerung der Düsennadel 73 der Verschlußdüse (V) aufgenommen. Dadurch kann die quer zur Spritzachse gehende Verriegelungsbzw. Entriegelungsbewegung zur Ankupplung bzw. Abkupplung des Steuerzylinders 14 an das benachbarte kraftübertragende Element ausgenutzt werden. Das in die Kunststoff-Spritzgießeinheit integrierte Trägerelement 10 ist mit dem Plastifizierzylinder 11 in linearen Führungen zu einer festgespannten Spritzgießform hin verfahrbar und auf diese auf- bzw. absetzbar. Der Schließhub bzw. Öffnungshub des Steuerzylinders 14 wird mit Hilfe einer Schaltstange 82, einer Betätigungsstange 77 und eines Zwischenstückes 80 auf die Düsennadel 73 übertragen. Die Shaltstange 82 und die Betätigungsstange 77 sind über ein Klemmstück 80 miteinander verbunden, wie insbesondere aus Fig. 9 ersichtlich. Die Schaltstange 82 befindet sich mit einem endständigen Gewinde 82a im Eingriff mit dem Klemmstück 80. Durch Drehen der Schaltstange 82 mit Hilfe eines am Innersechskant 82b angreifenden Schlüssels kann die kann diese im Verhältnis zum Klemmstück 80 axial verstellt und dadurch der Verschiebeweg der Düsennadel 73 auf einen optimalen Verschluß justiert werden. Die eingestellte Justierposition kann mit Hilfe einer Spannschraube 81 durch Verspannen des Gewindes im Durchgriffsbereich fixiert werden. Zu diesem Zweck überbrückt die Spannschraube 81 einen von unten bis zur Schaltstange 82 eingebrachten Spalt im Klemmstück 80. Insbesondere aus Fig. 2 wird in Verbindung mit Fig. 9 deutlich, daß die Betätigungsstange 77 das Klemmstück 80 im Bereich einer Bohrung und eines Schlitzes durchsetzt und mit Hilfe einer den Schlitz überbrückenden Schraube mit dem Klemmstück 80 nach entsprechender Einjustierung verspannbar ist. Ein am vorderen Ende der Betätigungsstange 77 angeordneter Kugelkopf ist unter Bildung eines Kugelgelenkes in einem Kugelkäfig 88b des stabförmigen, kraftübertragenden Zwischenstückes 88 gefangen, das seinerseits mit seinem vorderen Ende einen rückseitigen Kugelkopf 73c der Düsennadel 73 zur Bildung eines weiteren Kugelgelenkes umgreift. Der Kugelkäfig 88b im rückseitigen verdickten Abschnitt 88a des Zwischenstückes 88 ist zur Einführung bzw. Herausnahme des Kugelkopfes der Betätigungsstange 77 seitlich offen. Im Kugelkäfig 88b ist der Kugelkopf der Betätigungsstange 77 mit Hilfe eines seitlichen Sperrelementes 88c gesichert. Das Zwischenstück 88 verläuft etwa koaxial zur Düsennadel 73. Die Betätigungsstange 77 ist von einem, das vordere Ende des Plastifizierzylinders 11 mit Spiel umschließenden, Schwenkring 76 gehalten. Der Schwenkring ist am Plastifizierzylinder 11 beidseits und nahe seiner obersten Mantellinie y-y (Fig. 2) für eine das Schließen und Öffnen der Verschlußdüse (V) ermöglichende Schwenkbewegung gelenkig abgestützt. Zu diesem Zweck tauchen zwei radial zum Plastifizierzylinder 11 angeordnete und mit dem Schwenkring 76 in Gewindeeingriff stehende Gewindebolzen 89 mittels Kugelköpfen 89a in entsprechende kugelkalottenartige Schwenklager 11c (Fig. 3) des Plastifizierzylinders 11 ein. Dadurch ist der Schwenkring um eine gedachte horizontale Schwenkachse begrenzt verschwenkbar. Der Abstand m (Fig. 9) diese Schwenkachse s-s zu der etwa horizontal verlaufenden Betätigungsstange 77 entspricht etwa dem Durchmesser des Plastifizierzylinders 11. Insoweit bildet der Schwenkring 76 einen relativ langen Schwenkhebel, so daß sich bei der geringen Verzchlußverschwenkung bzw. Öffnungsverschwenkung dieses Schwenkhebels 76 eine nahezu horizontale Bewegung der Betätigungsstange 77 ergibt. Die Gewindebolzen 89 sind in ihrer eingestellten Arbeitsposition mittels Schraubermuttern 90 gesichert. Zur Halterung durchgreift die Betätigungsstange 77 eine in der vertikalen Symmetrieebene z-z (Fig. 9) befindliche Lagerbohrung 76b des Schwenkringes 76. Die Lagerbohrung 76b weist zwei kegelstumpfförmige Abschnitte 76b' auf, welche entlang einer inneren Umfangslinie 76b'' ineinander übergehen.

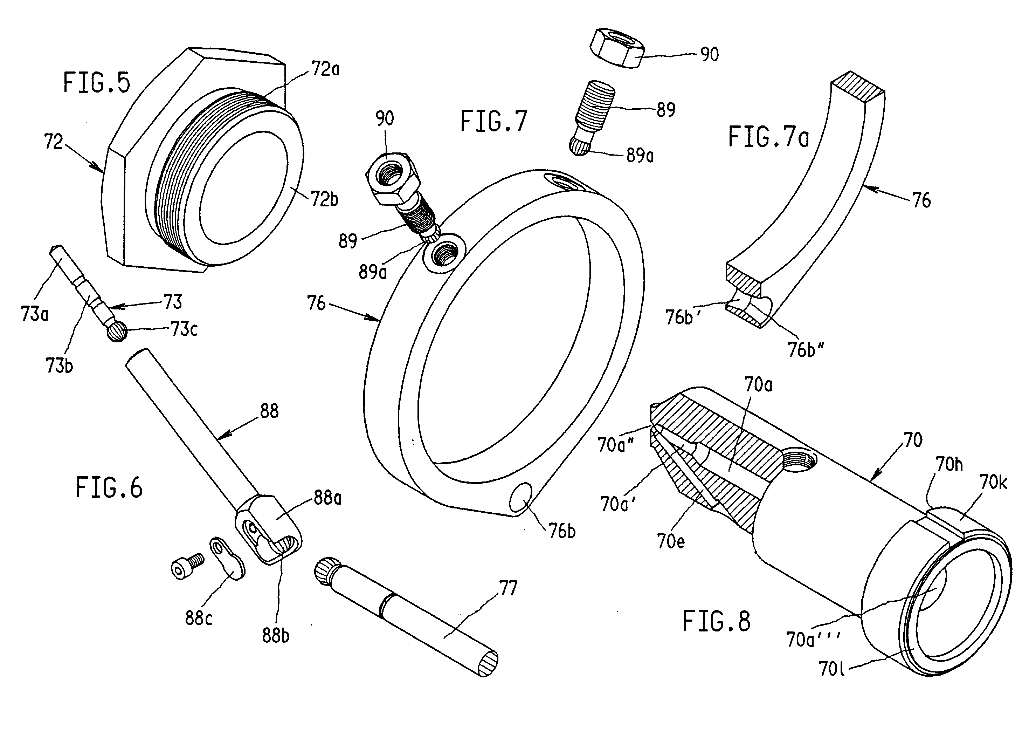

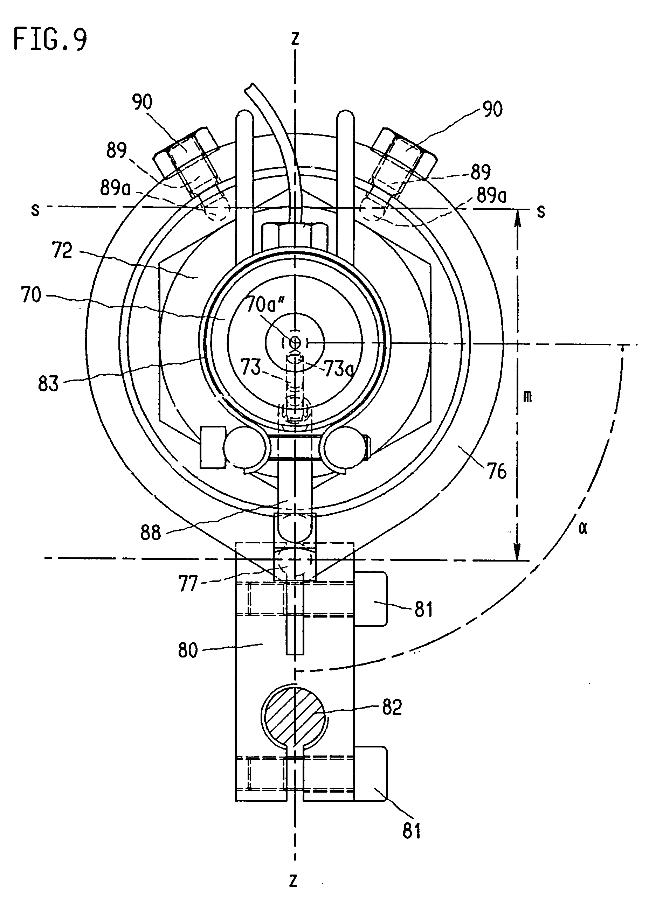

Der Düsenkörper 70 mit Mantelfläche 70m weist einen koaxialen, sich bis zur Düsenmündung 70a'' erstreckenden Düsenkanal 70a auf, der für den Durchfluß des Kunststoffmaterials völlig frei ist. Die den Düsenkanal 70a an der Düsenmündung 70a'' absperrende Düsennadel 73 ist in einer spitzwinklig zum Düsenkanal 70a verlaufenden Schiebebohrung 70e aufgenommen. Der Düsenkörper 70 ist einstückig und mit einer planen Anlagefläche 70 l versehen. Der Durchmesser der Düsennadel 73 entspricht der lichten Weite der Düsenbohrung 70e, durch welche der Düsenkanal 70a hinter der Düsenmüdung 70a'' am vorderen Ende eines Mündungsabschnittes 70a' angeschnitten ist. Bei den Steuerungsbewegungen der ein Verschlußabschnitt 73a und einen Führungsabschnitt 73b (Fig. 6) aufweisenden Düsennadel 73 gleitet deren Mantelfläche daher unmittelbar an der inneren Fläche der in den Düsenkörper eingebrachten Schiebebohrung 70e. Der Plastifizierzylinder 11 ist mit einer radialsymmetrischen Anschlußbohrung 11e zur Aufnahme eines Radialflansches 70k des Düsenkörpers 70 versehen. Die lichte Weite der Anschlußbohung 11e entspricht dem Durchmesser eines Anschlußgewindes 72a einer Hohlschraube 72. Diese ist mit einem Radialflansch 72c mit Außenkant für den Angriff eines Werkzeuges versehen. Das Anschlußgewinde 72a der Hohlschraube 72 befindet sich im Eingriff mit einem Innengewinde in der Anschlußbohrung 11e. Dadurch ist eine ringförmige, feingeschliffene, plane Dichtfläche 70 I des Radialflansches 70k auf eine korrespondierende Dichtfläche 11a des Plastifizierzylinders 11 dichtend aufpreßbar, indem die Hohlschraube 72 über die Anlagefläche axial auf die Ringschulter 70h des Düsenkörpers 70 einwirkt. Ein axiales Verklemmen des Radialflansches 70k des Düsenkörpers 70 mit dem Plastifizierzylinder erfolgt nach lagegerechter Einjustierung dieses Düsenkörpers derart, daß die Düsennadel 73 und die kraftübertragenden Elemente symmetrisch zur vertikalen Symmetrieebene z-z (Fig. 9) liegen. Die Düsenbohrung 70a weist einen sich trichterartig verengenden Eingangsabschnitt 70a''' auf, in welchen sich das kegelförmige Ende 70a' des Düsenkanals 70a endet in der Düsenmündung 70a''.

Mit Hilfe des Steuerzylinders 14 ist die Düsennadel 73 sowohl in Verschlußstellung als auch in Offenstellung steuerbar. Zusätzlich umschließt, wie aus Fig. 1 erkennbar, eine Spiralfeder 26 die Schaltstange 82, welche Spiralfeder 26 über einen Sprengring 87 an der Schaltstange angreift und an einem Armierungselement 51 des Plastifizierzylinders abgestützt ist. Dadurch wird die insoweit von einer Feder belastete Düsennadel 73 auch dann in Verschlußstellung gehalten, wenn die Schaltstange 82 vom Steuerzylinder 14 abgekuppelt ist.

Der mittels radial und vertikal geführter Schieber 33'; 33''; 33''' in der Bohrung 10a des Trägerelementes 10 verriegelbare Plastifizierzylinder 11 ist im Gefolge einer Rückwartsbewegung des Trägerelementes 10 für eine Auswechslung mit der Förderschnecke freisetzbar. Der Steuerzylinder 14 ist am Trägerelement 10 angeordnet und bildet bei der Freisetzungsbewegung eine Bewegungseinheit mit diesem Trägerelement 10. Die automatische Kupplung zwischen Schaltstange 82 und der Kolbenstange des Steuerzylinders 14 umfaßt, wie aus Fig. 1 erkennbar, ein an der Schaltstange 82 angeordnetes Kupplungsteil 14b und ein an der Kolbenstange des Steuerzylinders 14 angeordnetes Kupplungteil 17. Im gekuppelten Zustand hintergreifen sich die beiden genannten Kupplungsteile, so daß sich die automatische Lösung der Kupplung durch die vertikale Bewegung des Schiebers 33'; 33''; 33''' bei der Entriegelungsbewegung ergibt. Die Kupplung ist in einer Nische T des Trägerelementes 10 angeordnet. Die Schaltstange 82 ist etwa parallel zur Spritzachse a-a in Armierungselementen 50,52 des Plastifizierzylinders 11 mittels Gleitmuffen 57 geführt. Der mit Heizeinrichtung versehene Plastifizierzylinder 11 weist eine zweiteilige Schutzabdeckung 18 auf, deren unteres Teil 18'' die Schaltstange 82 abdeckt und deren oberes Teil 18' einen Haltering 53 aufweist. Beide Teile sind am Armierungselement 51 des Plastifizierzylinders 11 befestigt. Der Kopf der unteren Befestigungsschraube 54 ist als Zentrierkegel ausgebildet. Dieser kann bei Abtransport der Plastifiziereinheit zur Festlegung zentrierend in entsprechenden Zentrierausnehmungen der Stellflächen der Transporteinrichtungen eingreifen. Nach einer programmgesteuerten Entriegelung des Plastifizierzylinders und nach seiner axialen Arretierung ist der Plastifizierzylinder aus dem Trägerelement 10 freisetzbar, indem dieses durch hydraulische Mittel vom Plastifizierzylinder 11 abgezogen wird. Beim Abziehen werden die an einer Steckerplatte 28' des Trägerelementes 10 angeordneten Steckverbinder 29' von den an einer Steckerplatte 28 des Plastifizierzylinders 11 befestigten Steckverbindern 29 getrennt.

Dem Plastifizierzylinder 11 kann ein mit dem Düsenkörper 70 hinsichtlich der äußeren Gestalt identischer Düsenkörper 170 ohne Düsenbohrung zugeordnet sein. Dieser Düsenkörper 170 ist zur bedarfsweisen Bildung einer offenen Düse 0 mit dem Düsenkörper 70 austauschbar. Wie insbesondere aus den Figuren 3 und 4 in Verbindung mit Fig. 8 erkennbar, sind die wahlweisen Düsenkörper 70; 170 mit Hilfe eines Stiftes 71 in Arbeitsposition gesichert, der zur Drehverhinderung einenends in den Düsenkörper 70 und anderenends in den Plastifizierzylinder 11 eintaucht. Die Durchflußkanäle 70a der wahlweisen Düsenkörper 70 bzw. 170 konzentrisch zur Heizwendel 79 angeordnet, so daß von gleichen thermischen Bedingungen im Durchflukanal 70a ausgegangen werden kann. Der rückwärtige Endabschnitt 77a der Betätigungsstange 77 durchgreift eine Ausnehmung 50a (Fig. 2) des Armierunselementes 50.

**Patentansprüche**

1. Plastifizieraggregat an einer Kunststoff-Spritzgießeinheit mit zugehörigem Trägerelement (10) mit zentraler Bohrung (10a) für eine zentrierende Befestigung des Plastifizierzylinders (11), der mit einer automatisch verschließbaren Düse (V) ausgerüstet ist, deren Düsenkörper (70) mit dem Plastifizierzylinder (11) koaxial verbindbar und deren die Düsenmündung (70a'') abschließende Düsennadel (73) von einer, parallel zum Düsenkanal (70a) angeordneten, hydraulischen Kolben-Zylinder-Einheit (Steuerzylinder 14) steuerbar ist, dessen Kolben über wenigstens ein kraftübertragendes Element (82; 77; 88) mit der Düsennadel (73) gelenkig verbunden ist, wobei der Düsenkörper (70) einen koaxialen, sich bis zur Düsenmündung (70a") erstreckenden und für den Durchfluß des Kunststoffmaterials freien Düsenkanal (70a) aufweist und die den Düsenkanal (70a) an der Düsenmündung (70a") absperrende Düsennadel (73) in einer spitzwinklig zum Düsenkanal (70a) verlaufenden Schiebebohrung (70e) aufgenommen ist,
dadurch gekennzeichnet, daß der mittels Schieber (33'; 33''; 33''') in der Bohrung (10a) des Trägerelementes (10) verriegelbare Plastifizierzylinder (11) im Gefolge einer Rückwärtsbewegung des Trägerelementes (10) für eine Auswechslung freisetzbar und der Steuerzylinder (14) am Trägerelement (10) angeordnet ist.

2. Plastifizieraggregat nach Patentanspruch 1, dadurch gekennzeichnet, daß eines der kraftübertragenden Elemente ein stabförmiges etwa koaxial zur Düsennadel (73) angeordnetes Zwischenstück (88) ist.

3. Plastifizieraggregat nach Patentanspruch 2, dadurch gekennzeichnet, daß die mit einer Schaltstange (82) starr verbundene Betätigungsstange (77) von einem das vordere Ende des Plastifizierzylinders (11) mit Spiel umschließenden Schwenkring (76) gehalten ist, der am Plastifizierzylinder (11) beidseits und nahe seiner obersten Mantellinie (y-y in Fig. 2) für eine das Schließen und Öffnen der Verschlußdüse (V) ermöglichende Schwenkbewegung gelenkig abgestützt ist.

4. Plastifizieraggregat nach Patentanspruch 3, dadurch gekennzeichnet, daß zwei radial zum Plastifizierzylinder (11) angeordnete und mit dem Schwenkring (76) in Gewindeeingriff stehende Gewindebolzen (89) mittels Kugelköpfen (89a) in entsprechende kugelkalottenartige Schwenklager (11c in Fig. 3) des Plastifizierzylinders (11) unter Bildung einer gedachten horizontalen Schwenkachse (s-s in Fig. 9) eintauchen, deren Abstand (m in Fig. 9)von der horizontal verlaufenden Betätigungsstange (77) etwa dem Durchmesser des Plastifizierzylinders (11) entspricht.

5. Plastifizieraggregat nach Patentanspruch 3 oder 4, dadurch gekennzeichnet, daß die Betätigungsstange (77) eine in der vertikalen Symmetrieebene (z-z in Fig. 9) befindliche Lagerbohrung (76b) des Schwenkringes (76) durchgreift, die zwei kegelstumpfförmige Abschnitte (76b') aufweist, welche entlang einer inneren Umfangslinie (76b'') ineinander übergehen.

6. Plastifizieraggregat nach einem der vorhergehenden Patentansprüche, dadurch gekennzeichnet, daß der Steuerzylinder (14) mit wenigstens einem Schieber (33'', 33''') fest verbunden und im Gefolge der radialen Verriegelungs- bzw. Entriegelunsbewegung dieses Schiebers vom benachbarten kraftübertragenden Element (Schaltstange 82) ab- bzw. ankuppelbar ist, das mit der Betätigungsstange (77) über ein Klemmstück (80) verbunden und vom unteren Teil (18'') einer zweiteiligen Schutzabdeckung (18) umschlossen ist.

7. Plastifizieraggregat nach einem der vorhergehenden Patentansprüche, dadurch gekennzeichnet, daß zur bedarfsweisen Bildung einer offenen Düse (0 in Fig. 4) ein mit dem Düsenkörper (70) hinsichtlich der äußeren Gestalt identischer Düsenkörper (170) ohne Schiebebohrung anstelle eines Düsenkörpers mit Düsenbohrung mit dem Plastifizierzylinder (11) verbindbar ist.

**Claims**

1. Plasticising unit of a plastic injection moulding unit comprising an associated carrier block (10) with a central bore (10a) to enable the plasticising cylinder (11) to be securely centred, which cylinder (11) is provided with a nozzle (V) that can be automatically shut off, the nozzle body (70) of which is coaxially connectable to the plasticising cylinder (11) and the valve needle (73) of which closing the nozzle opening (70a") is controllable by a hydraulic piston-and-cylinder-unit (control cylinder 14), which is arranged parallel to the nozzle channel (70a), the piston of which unit is pivotally connected to the valve needle (73) through the intermediary of at least one power transmitting element (82;77;88), whereby the nozzle body (70) has a coaxial nozzle channel (70a) which extends up to the nozzle opening (70a") and which permits a free flow of plastics material, and whereby the valve needle (73) closing off the nozzle channel (70a) at the nozzle opening (70a") is received in a guide bore (70e) extending at an acute angle to the nozzle channel (70a),

characterized in that the plasticising cylinder (11), which can be locked in position in the bore (10a) of the carrier block (10) by means of slides (33';33'';33'''), is releasable for replacement after the carrier block (10) has been moved rearwards and the control cylinder (14) is arranged on the carrier block (10).

**2.** Plasticising unit according to claim 1, characterised in that one of the power transmitting elements is a bar-shaped intermediate member (88) arranged approximately coaxially to the valve needle (13).

**3.** Plasticising unit according to claim 2, characterised in that the actuating bar (77), which is rigidly connected to a switch rod (82), is held by a pivot ring (76) surrounding the frontal end of the plasticising cylinder (11) with a clearance, which pivot ring (76) is pivotally supported on both sides of the plasticising cylinder (11) in the vicinity of its uppermost generatrix (y-y in Figure 22) for a pivotal movement enabling the closing and opening of the shutoff nozzle (V).

**4.** Plasticising unit according to claim 3, characterised in that two threaded bolts (89), that are arranged radially to the plasticising cylinder (11) and are threadedly connected to the pivot ring (76), extend by means of spherical heads (89a) into corresponding spherical-segment-type pivotal bearings (11c in Figure 3) of the plasticising cylinder (11) forming an imaginary horizontal pivot axis (s-s in Figure 9), the distance of which (m in Figure 9) from the horizontally extending actuating bar (77) corresponds approximately to the diameter of the plasticising cylinder (11).

**5.** Plasticising unit according to claims 3 or 4, characterised in that the actuating bar (77) passes through a bearing bore (76b) in the pivot ring (76); the bearing bore (76b) is located in the vertical symmetry plane (z-z in Figure 9) and has two frustoconical sections (76b') which merge into one another along an inner circumferential line (76b").

**6.** Plasticising unit according to one of the preceding claims, characterised in that the control cylinder (14) is fixedly connected to at least one slide (33", 33"') and is couplable to and uncouplable from the adjacent power transmitting element (switch rod 82) after the radial locking or unlocking movement of this slide, which element is connected to the actuating bar (77) by means of a clamping member (80) and is surrounded by the lower part (18") of a two-part cover (18).

**7.** Plasticising unit according to one of the preceding claims, characterised in that , if required, to form an open nozzle (0 in Figure 4), a nozzle body (170) which is identical to the nozzle body (70) with regard to the external configuration but without a guide bore, is connectable to the plasticising cylinder (11) in the place of a nozzle body with a nozzle bore.

**Revendications**

**1.** Agrégat de plastification équipant une machine à injecter les matières plastiques, présentant un élément de support (10) associé, percé d'un alésage central (10a) pour assurer une fixation, avec effet de centrage, du cylindre de plastification (11) muni d'une buse (V) obturable automatiquement, dont le corps (70) peut être relié coaxialement audit cylindre de plastification (11) et dont le pointeau (73), obturant l'ajutage (70a"), peut être commandé par un vérin hydraulique (cylindre de commande 14) qui est disposé parallèlement au canal (70a) de la buse, et dont le piston est relié de manière articulée, au pointeau (73) de la buse, par l'intermédiaire d'au moins un élément (82 ; 77 ; 88) transmetteur de forces, le corps (70) de la buse présentant un canal coaxial (70a), s'étendant vers l'ajutage (70a") de la buse et autorisant l'écoulement de la matière plastique, et le pointeau (73) de la buse, isolant ledit canal (70a) au niveau dudit ajutage (70a"), étant logé dans un alésage de coulissement (70e) s'étendant à angle aigu par rapport au canal (70a) de la buse, caractérisé par le fait que le cylindre de plastification (11), verrouillable au moyen de verrous (33' ; 33" ; 33"') dans l'alésage (10a) de l'élément de support (10), peut être dégagé en vue d'un remplacement suite à un mouvement rétrograde de l'élément de support (10), et le cylindre de commande (14) est disposé sur ledit élément de support (10).

**2.** Agrégat de plastification selon la revendication 1, caractérisé par le fait que l'un des éléments transmetteurs de forces est une pièce intercalaire (88) en forme de barrette, disposée à peu près coaxialement au pointeau (73) de la buse.

**3.** Agrégat de plastification selon la revendication 2, caractérisé par le fait que la tige d'actionnement (77), reliée rigidement à une tige de sélection (82), est retenue par une bague pivotante (76) qui entoure, avec jeu, l'extrémité antérieure du cylindre de plastification (11) et est en appui articulé sur ledit cylindre de plastification (11), de part et d'autre et à proximité de sa génératrice supérieure extrême (y-y sur la figure 2), en vue d'un mouvement pivotant permettant la fermeture et l'ouverture de la buse obturatrice (V).

4. Agrégat de plastification selon la revendication 3, caractérisé par le fait que deux chevilles filetées (89), disposées radialement par rapport au cylindre de plastification (11) et en prise, par vissage, avec la bague pivotante (76) pénètrent, au moyen de têtes sphériques (89a), dans des coussinets correspondants de pivotement (11c sur la figure 3) du type calottes sphériques, ménagés dans le cylindre de plastification (11), en formant un axe horizontal imaginaire de pivotement (s-s sur la figure 9) dont la distance (m sur la figure 9), par rapport à la tige d'actionnement (77) s'étendant horizontalement, correspond sensiblement au diamètre du cylindre de plastification (11).

5. Agrégat de plastification selon la revendication 3 ou 4, caractérisé par le fait que la tige d'actionnement (77) traverse un trou de montage (76b) de la bague pivotante (76), qui est situé dans le plan vertical de symétrie (z-z sur la figure 9) et présente deux régions tronconiques (76b') fusionnant, l'une dans l'autre, le long d'une ligne périphérique intérieure (76b").

6. Agrégat de plastification selon l'une des revendications précédentes, caractérisé par le fait que le cylindre de commande (14) est relié rigidement à au moins un verrou (33", 33"') et peut, par suite du mouvement radial respectif de verrouillage ou de déverrouillage de ce verrou, être respectivement désaccouplé de l'élément voisin transmetteur de forces (tige de sélection 82), ou bien être accouplé audit élément qui est relié, à la tige d'actionnement (77), par l'entremise d'une pièce de serrage (80), et est entouré par la partie inférieure (18") d'un capot protecteur (18) en deux parties.

7. Agrégat de plastification selon l'une des revendications précédentes, caractérisé par le fait que, pour former si besoin est une buse ouverte (0 sur la figure 4), un corps de buse (170) dépourvu d'alésage de coulissement, et dont la configuration externe est identique à celle du corps de buse (70), peut être relié au cylindre de plastification (11) à la place d'un corps de buse pourvu d'un gicleur.

FIG. 1

EP 0 322 497 B1

# FIG. 2

EP 0 322 497 B1

FIG. 3

FIG. 4

FIG.5

72

72a

72b

73
73a
73b
73c

FIG.6

88
88a
88b
88c

77

FIG.7

90

89
89a

76

76b

90

89

89a

FIG.7a

76

76b'

76b"

70a
70a"
70a'
70e

70

70h
70k

70a'''

70l

FIG.8

EP 0 322 497 B1

EP 0 322 497 B1

**FIG.9**